# EUROPEAN PATENT APPLICATION

(11) **EP 4 108 910 A1**
(43) Date of publication of application: **28.12.2022**
(21) Application number: 21181506.3
(22) Date of filing: 24.06.2021
(51) Int. Cl.: F03D 7/02, F03D 9/10, F03D 9/11, F03D 9/28

(54) **WIND TURBINE POWER PLANT INCLUDING AUXILIARY SYSTEMS**

(71) Applicant: Siemens Gamesa Renewable Energy A/S, 7330 Brande (DK)
(72) Inventor: Hawkins, Samuel, 7100 Vejle (DK); Jensen, Dennis Stachniuk, 7330 Brande (DK)
(74) Representative: SGRE-Association

(57) **Abstract**

It is provided a transmission apparatus (100) for transmitting electrical power generated by at least one wind turbine (10) to a power system (200), the transmission apparatus (100) comprising an auxiliary circuit (180, 181) connected to the at least one wind turbine (10), the power system (200) and one or more turbine auxiliaries (300), the turbine auxiliaries (300) being electrically fed by at least one wind turbine (10) or the power system (200) through the auxiliary circuit (180, 181). The auxiliary circuit (180, 181) includes at least an energy storage (186), the turbine auxiliaries (300) being electrically connected to the energy storage (186) .

## Description

### Field of invention

The present invention relates to the technical field of efficiently providing power to the auxiliary systems comprised in a power plant including at least a wind turbine.

### Art Background

Wind turbines operate by converting moving wind into rotational motion which is then converted into electrical power using a power conversion system. The power conversion system typically includes the wind turbine rotor made up of aerodynamic rotor blades a rotating shaft, a transmission system or gearbox, a generator, and finally a power conditioning system which may include high power frequency converters. The electrical power generated is then fed into an electrical power grid or to an electrical consumer.

Due to the design of the power conversion system and/or inefficiencies in the power conversion system the wind turbine is not able to produce power at all wind speeds and typically has a cut-in wind speed and/or cut-in rotor speed which is the minimum required wind speed or rotor speed before the wind turbine can deliver power to the electrical power grid. When the wind speed or rotor speed of the wind turbine is below the cut-in speed then power must be consumed by the wind turbine to power systems within which are necessary for operation and protection. These systems are referred to as auxiliary systems and may include components such as pumps, fans, and motors as well as lights, heaters, sensors, control systems, communication systems and other similar devices and systems.

The power consumption of the auxiliary systems can range from only a few watts to over 100 kilowatts or more, depending on the operational state and size of the individual wind turbine. For a wind turbine operator this power consumption can result in high costs as the power may need to be purchased from an electrical network or supplied through other, costly, sources. For operators of wind parks consisting of multiple wind turbines, the consumption of power from non-producing wind turbines subtracts from the output of wind turbines which are producing power resulting in lower revenue.

In some other occasions, for example when there is a fault in the wind turbine power conditioning system, the wind turbine will not be able to deliver power to the electricity network regardless of the wind speed. During this time, power consumption will be used again from the electricity network for auxiliary systems within the wind turbine.

Therefore, there is still a need for providing a more efficient power transmission line for providing power to the auxiliary systems comprised in a power plant including at least a wind turbine.

### Summary of the Invention

This need may be met by the subject matter according to the independent claims. Advantageous embodiments of the present invention are described by the dependent claims.

According to an aspect of the present invention it is provided a transmission apparatus for transmitting electrical power generated by at least one wind turbine to a power system, the transmission apparatus comprising an auxiliary circuit connected to the at least one wind turbine, the power system and one or more turbine auxiliaries, the turbine auxiliaries being electrically fed by at least one wind turbine or the power system through the auxiliary circuit, wherein the auxiliary circuit includes at least an energy storage , the turbine auxiliaries being electrically connected to the energy storage.

According to embodiments of the present invention, the auxiliary circuit comprises an auxiliary line for connecting the turbine auxiliaries to the at least one wind turbine or the power system by-passing the energy storage. The transmission apparatus may comprise at least one auxiliary circuit breaker for disconnecting the auxiliary circuit from the at least one wind turbine and the power system.

According to embodiments of the present invention, the energy storage may comprise any of a battery electric storage system, a super capacitor, a flywheel, a hydrogen electrolysis or fuel cell system or any other energy storage that may be replenished through electric power.

The above-described transmission apparatus provides a plurality of advantages. The use of an energy storage system prevents or reduces the flow of power into a wind turbine or wind farm, thereby preventing the power plant from becoming a consumer of energy. This provides a benefit by reducing the costs associated with the purchase of electrical energy. By avoiding consumption of energy from an external grid, the wind turbine or wind farm can reduce their carbon emissions by avoiding use of energy that may be generated by carbon intensive technologies.

The present invention may be integrated in a single wind turbine or in wind farm comprising a plurality of wind turbines.

According to another aspect of the present invention it is provided a method of operating a wind turbine including the above-described auxiliary circuit, wherein the method comprises the steps of:
putting the wind turbine in operation,
sending power to the power system and to the energy storage,
if the wind turbine stops producing electric power for the power system, using the auxiliary circuit for supplying energy to the turbine auxiliaries.

According to embodiments of the present invention, power is sent to the energy storage if the wind turbine is producing the maximum allowable power or if the wind turbine is producing power above a predefined power threshold below the maximum allowable power or if conditions are identified that are typically associated with predefined values of electricity.

According to yet another aspect of the present invention it is provided a method of operating a wind park including a plurality of wind turbines including the above describe auxiliary circuit, wherein the method comprises the steps of:
putting the wind turbines in operation,
sending power to the power system and to the energy storages of the wind turbines,
if a wind turbine stops producing electric power for the power system and if the power produced by the wind farm is below a predefined threshold, using the auxiliary circuit for supplying energy to the respective turbine auxiliaries.

Using only the flow of power on a wind farm level, rather than the individual wind turbine level, avoids overuse of the energy storage system. Some energy storage systems (such as battery electric storage) can have a limited number of lifetime cycles and so overuse may lead to early end-of-life and replacement.

### Brief Description of the Drawings

The aspects defined above, and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 schematically illustrates a transmission apparatus for transmitting electrical power between a wind power plant and a power system according to a first embodiment of the invention.
Fig. 2 schematically illustrates a transmission apparatus for transmitting electrical power between a wind power plant and a power system according to a second embodiment of the invention.
Fig. 3 illustrates steps of a first embodiment of a method for transmitting electrical power between a wind power plant, a power system and one or more auxiliaries according to embodiments of the invention.
Fig. 4 illustrates steps of a second embodiment of a method for transmitting electrical power between a wind power plant, a power system and one or more auxiliaries according to embodiments of the invention.
Fig. 5 illustrates further steps of the method according to second embodiment of figure 4.

### Detailed Description

The illustration in the drawings is in schematic form. It is noted that in different figures, similar or identical elements are provided with the same reference signs.

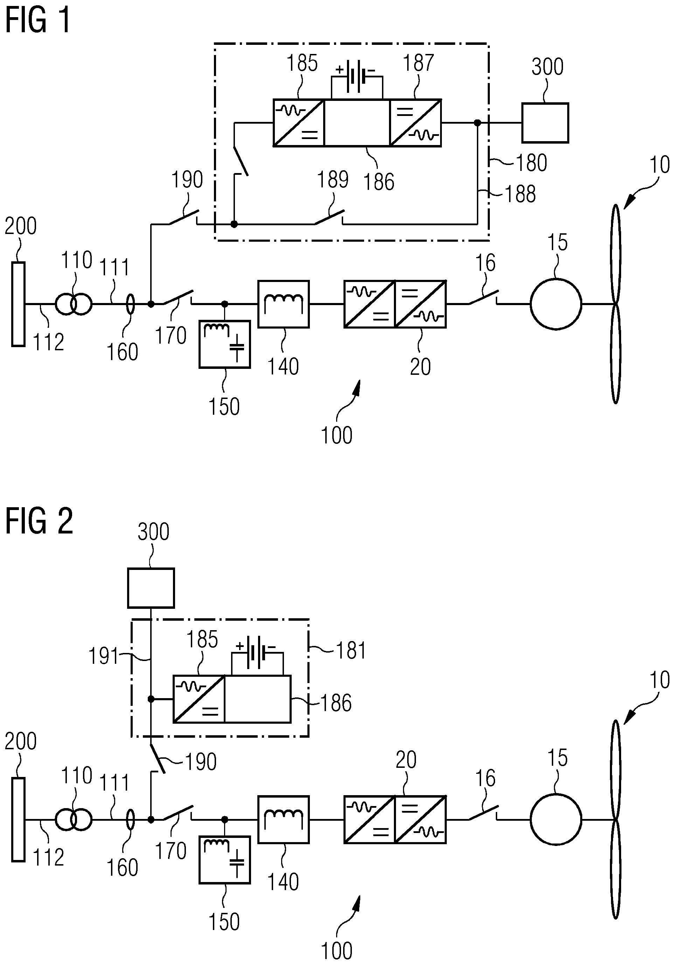

Fig. 1 illustrates a transmission apparatus 100 interposed between a wind power plant 10 and a power system 200, according to a first embodiment of the present invention. The transmission apparatus 100 is represented according to a single line scheme, but may be a 3-phase system, where the single line of figure 1 represents alone the three conductors of a typical 3-phase system. The wind power plant 10 may include one or more wind turbines (one wind turbine 10 is represents in the schematic drawing of the embodiment in figure 1). The wind power plant 10 may be an off-shore wind power plant or an off-shore wind power plant. The power system 200 may consist of a utility grid. The transmission apparatus 100 is connected to the power plant 10 and to the power system 200 for transmitting the electrical power generated by the wind power plant 10 to the power system 200. Each wind turbines of the wind power plant 10 includes an electrical generator 15 (one electrical generator 15 is represents in the schematic drawing of the embodiment in figure 1). Each wind turbines of the power plant 10 further includes a wind turbine frequency converter 20. The wind turbine power converter 20 is connected to the electrical generator 15. Between the frequency converter 20 and the electrical generator 15 a generator circuit breaker 16 is provided.

The transmission apparatus 100 comprises a transformer 110 which is connectable between the wind power plant 10 and the power system 200. According to other embodiments of the present invention (not shown) the transmission apparatus 100 may comprise more than one transformer 110. The transformer 110 is configured for changing in operation a first AC voltage level provided by the wind power plant 10 to a second AC voltage level to be provided to the power system 200. The present invention may be applied to any transmission apparatus 100 and any transformer 110, independently from the values of the first AC voltage level and the second AC voltage level. The transmission apparatus 100 includes a reactor 140 connectable in series between the output of the frequency converter 20 and the first side 111 of the transformer 110. The reactor 140 may be used for cooperating in controlling the reactive power transmitted along the transmission apparatus 100. The transmission apparatus 100 further includes an harmonics filter 150, having a terminal connected between the reactor 140 and the first side 111 of the transformer 110. The reactor 140 and the impedance 150 together may form a filter for the voltage output of the frequency converter 20. The transmission apparatus 100 further includes a current transformer 160 connected to the first side 111 of the transformer 110 and a main circuit breaker 170 interposed between the current transformer 160 and reactor 140.

The transmission apparatus 100 further includes at least one auxiliary circuit 180 having a terminal connected upstream the first side 111 of the transformer 110. The auxiliary circuit 180 is connected to the wind power plant 10, the power system 200 and one or more turbine auxiliaries 300. The turbine auxiliaries 300 may comprise a cooling pump or a fan or a pitch drive associated to the blades of a wind turbine or a yaw drives associated to a nacelle of a wind turbine or similar other electrical consumers within the wind power plant 10 like a dehumidification system or an external lighting system or a control and monitoring system. The turbine auxiliaries 300 are electrically fed by the wind power plant 10 or the power system 200 through the auxiliary circuit 180, as better described in the following. The auxiliary circuit 180 may be disconnected from the wind power plant 10 and the power system 200 through an auxiliary circuit breaker 190.

In the embodiment of figure 1, the auxiliary circuit 180 comprises an AC/DC converter 185, an energy storage 186 and a DC/AC converter 187, arranged in series from the auxiliary circuit breaker 190 to the turbine auxiliaries 300 and therethrough to the wind power plant 10 and the power system 200. The energy storage 186 may comprise a battery electric storage system, a super capacitor, a flywheel, a hydrogen electrolysis or fuel cell system or another energy storage system. A by-pass line 188 is arranged in parallel to the AC/DC converter 185, energy storage 186 and DC/AC converter 187, for directly connecting the turbine auxiliaries 300 to the auxiliary circuit breaker 190 and therethrough to the wind power plant 10 and the power system 200. The by-pass line 188 includes a by-pass breaker 189.

Fig. 2 illustrates a transmission apparatus 100 interposed between a wind power plant 10 and a power system 200, according to a second embodiment of the present invention. The second embodiment differentiates itself from the first embodiment for comprising another type of connection between the auxiliary circuit 181, the wind power plant 10, the power system 200 and one or more turbine auxiliaries 300. The transmission apparatus 100 includes an auxiliary line 191 for directly connecting the turbine auxiliaries 300 to the auxiliary circuit breaker 190 and therethrough to the wind power plant 10 and the power system 200. The auxiliary circuit 181 of this second embodiment includes the AC/DC converter 185 and the energy storage 186, wherein the AC/DC converter 185 is connected to the auxiliary line 191, between the auxiliary circuit breaker 190 and the turbine auxiliaries 300.

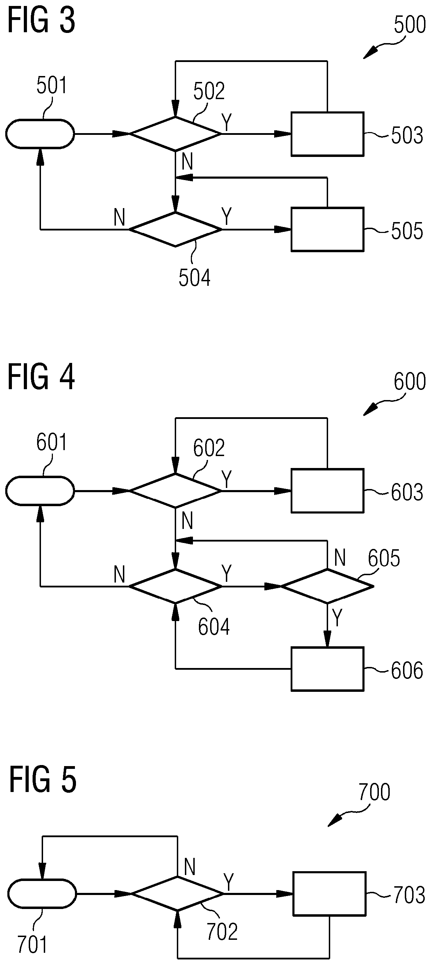

Fig. 3 illustrates a method 500 of operating the wind power plant 10 above described including one wind turbine. In a first step 501 of the method, the wind turbine is put in operation. While the wind turbine is in operation, energy is sent to the power system 200. In a second step 502 of the method 500, a condition is checked for allowing power to be sent to the energy storage 186. If the condition in the second step 502 is satisfied, then a third step 503 of the method 500 is performed, during which energy is stored into the energy storage 186. In an embodiment, the condition in the second step 502 is met if the wind turbine is producing the maximum allowable power, as permitted by the grid connection. The wind turbine may extract power from the wind in excess of what is permitted for supply to the grid and deliver this excess to the energy storage system. In another embodiment, the condition in the second step 502 is met if the wind turbine is producing power above a predefined power threshold below the maximum allowable power. In a further embodiment, the condition in the second step 502 is met if conditions (time of day, wind speed, temperature, etc.) are present that are typically associated with relatively low value of electricity. The value of electricity may also be directly monitored and used as a condition. If the condition in the second step 502 is not satisfied, then a fourth step 504 of the method 500 is performed, during which it is checked if the wind turbine can operate. For example, when the wind speed becomes low, the wind turbine stops producing electricity power for the power system 200. This may be detected though measurement of the current flowing to the power system 200, or by setting a minimum threshold for the rotational speed of the wind turbine, or by other means. When the wind turbine experiences a fault, it may also stop producing electricity for the power system 200 and go into a standstill or idling mode. If in the fourth step 504 it is detected that the wind turbine has stopped producing electric power for the power system 200, a fifth step 505 of the method 500 is performed, during which the auxiliary circuit 180, 181 supply energy to the turbine auxiliaries 300. In an embodiment, the auxiliary circuit breaker 190 disconnects the auxiliary circuit 180, 181 from the power system 200 and the energy storage 186 supplies the necessary power to the turbine auxiliaries 300. In another embodiment, the auxiliary circuit 180, 181 remains connected to the power system 200 and the energy storage 186 provides power to the turbine auxiliaries 300 and to the grid connection so that the flow of power into the wind turbine is reduced or reversed. By supplying power from the energy storage to the grid connection, power consumption from neighbouring wind turbines may be offset, thereby reducing the overall consumption of power by a wind farm with non-producing wind turbines. The amount of available energy in the energy storage 186 is monitored, so that before the energy storage 186 reaches a predetermined depletion threshold, the supply of power from the energy storage 186 is discontinued. When this occurs, the auxiliary circuit 180, 181 returns to being supplied power from the power system 200. Once conditions are appropriate the wind turbine will return to operation (fault cleared or wind speed or rotor speed sufficient for positive power flow out of the wind turbine). The third step of the method 503 will be executed again when the condition in the second step 502 is again satisfied.

**Figs. 4** and **5** illustrate a method 600, 700 of operating the wind power plant 10 above described including a plurality of wind turbines arranged in a wind farm. In this implementation, the objective of the wind farm operator may be to reduce the overall flow of power into the wind farm (rather than just individual wind turbines). In this embodiment a measure of the net power flow for the entire wind farm is made using either a single power flow measurement or multiple distributed measurements combined. The method of operating the wind power plant 10 comprises a first set 600 of steps, which are executed at each wind turbine of the power plant 10. In a first step 601 of the first set 600 of steps, the wind turbine is put in operation. While the wind turbine is in operation, energy is sent to the power system 200. In a second step 602, a condition is checked for allowing power to be sent to the energy storage 186. If the condition in the second step 602 is satisfied, then a third step 603 is performed, during which energy is stored into the energy storage 186. In an embodiment, the condition in the second step 602 is met if the wind turbine is producing the maximum allowable power, as permitted by the grid connection. The wind turbine may extract power from the wind in excess of what is permitted for supply to the grid and deliver this excess to the energy storage system. In another embodiment, the condition in the second step 602 is met if the wind turbine is producing power above a predefined power threshold below the maximum allowable power. In a further embodiment, the condition in the second step 602 is met if conditions (time of day, wind speed, temperature, etc.) are present that are typically associated with relatively low value of electricity. The value of electricity may also be directly monitored and used as a condition. If the condition in the second step 602 is not satisfied, then a fourth step 604 of the method 500 is performed, during which it is checked if the wind turbine can operate. For example, when the wind speed becomes low, the wind turbine stops producing electricity power for the power system 200. This may be detected though measurement of the current flowing to the power system 200, or by setting a minimum threshold for the rotational speed of the wind turbine, or by other means. When the wind turbine experiences a fault, it may also stop producing electricity for the power system 200 and go into a standstill or idling mode. If in the fourth step 604 it is detected that the wind turbine has stopped producing electric power for the power system 200, a fifth step 605 of the method 500 is performed, during which it is checked if the controller of the power plant 10 has sent a command to reduce power consumption. This is performed through a second set 700 of steps of the method (shown in fig. 5). The controller of the power plant 10 put the wind farm into operation (first step 701) and perform a control to check if the power produced by the wind farm is below a predefined threshold (second step 702). If such condition is satisfied, the command to reduce power consumption is sent to the wind turbines (third step 703). After that, in the fifth step 605, each turbine detects the presence of such command, then a sixth step 606 of the method 600 is performed, during which the auxiliary circuit 180, 181 supply energy to the turbine auxiliaries 300 of the respective wind turbine. Each individual wind turbine is not using its energy storage 186 to supply its turbine auxiliaries 300 until the command from then centralized control system is sent. Once a sufficient number of wind turbines within the wind farm stop operating, such that power begins to flow into the wind farm, a communication system is used to communicate to wind turbines which are out of operation to begin using their energy storage systems to supply their auxiliary systems. The centralized control system may be designed so that it tries to use only the minimum amount of power from the energy storage systems to keep the flow of power into the wind farm at zero. This may be done by sending the command to utilize the energy storage system to only a portion of the wind turbines which are out of operation or (for auxiliary systems which remain grid connected while being powered by the energy storage system) by sending a reference power to the energy storage systems so that they only reduce auxiliary consumption by a sufficient amount.

## Claims

1. A transmission apparatus (100) for transmitting electrical power generated by at least one wind turbine (10) to a power system (200), the transmission apparatus (100) comprising an auxiliary circuit (180, 181) connected to the at least one wind turbine (10), the power system (200) and one or more turbine auxiliaries (300), the turbine auxiliaries (300) being electrically fed by at least one wind turbine (10) or the power system (200) through the auxiliary circuit (180, 181), wherein the auxiliary circuit (180, 181) includes at least an energy storage (186), the turbine auxiliaries (300) being electrically connected to the energy storage (186).

2. The transmission apparatus (100) according to claim 1, wherein the auxiliary circuit (180, 181) comprising an auxiliary line (188, 191) for connecting the turbine auxiliaries (300) to the at least one wind turbine (10) or the power system (200) by-passing the energy storage (186).

3. The transmission apparatus (100) according to claim 1 or 2, wherein the transmission apparatus (100) comprises at least one auxiliary circuit breaker (190) for disconnecting the auxiliary circuit (180, 181) from the at least one wind turbine (10) and the power system (200).

4. The transmission apparatus (100) according to claim 1 or 2, wherein the energy storage (186) comprises a battery electric storage system, a super capacitor, a flywheel, a hydrogen electrolysis or fuel cell system.

5. A wind turbine (10) including the transmission apparatus (100) according to any of the previous claims and one or more turbine auxiliaries (300) connected to the transmission apparatus (100).

6. The wind turbine (10) according to the previous claim, wherein the turbine auxiliaries (300) include any of a cooling pump or a fan or a pitch drive or a yaw drive hydraulic pressure and distribution pump or a dehumidification system or an external lighting system or a control and monitoring system.

7. A wind turbine plant including a wind turbine (10) according to any of the claims 5 or 6.

8. A method (500) of operating the wind turbine according to the any of the claims 5 and 6, wherein the method comprises the steps of:
putting the wind turbine in operation,
sending power to the power system (200) and to the energy storage (186),
if the wind turbine stops producing electric power for the power system (200), using the auxiliary circuit (180, 181) for supplying energy to the turbine auxiliaries (300). or

9. The method (500) according to claim 8, wherein power is sent to the energy storage (186) if the wind turbine is producing the maximum allowable power or if the wind turbine is producing power above a predefined power threshold below the maximum allowable power or if conditions are identified that are typically associated with predefined values of electricity or if the value of electricity is below a predefined threshold.

10. A method (600, 700) of operating the wind turbine according to claim 7, wherein the method comprises the steps of:
putting the wind turbines in operation,
sending power to the power system (200) and to the energy storages (186) of the wind turbines,
if a wind turbine stops producing electric power for the power system (200) and if the power produced by the wind farm is below a predefined threshold, using the auxiliary circuit (180, 181) for supplying energy to the respective turbine auxiliaries (300).
